# EUROPEAN PATENT APPLICATION

(11) **EP 4 848 547 A1**
(43) Date of publication of application: **02.12.2026**
(21) Application number: 25745171.6
(22) Date of filing: 22.01.2025
(51) Int. Cl.: H02K 15/085, H02K 15/108

(54) **LAMINATED CORE MANUFACTURING METHOD**

(30) Priority: 25.01.2024 JP 2024009527
(71) Applicant: NHK Spring Co., Ltd., Yokohama-shi, Kanagawa 236-0004 (JP)
(72) Inventor: HIROTA, Yuji, Yokohama-shi, Kanagawa 236-0004 (JP); KOMATSU, Ryosuke, Yokohama-shi, Kanagawa 236-0004 (JP)
(74) Representative: Oppermann, Frank
(86) International application number: PCT/JP2025/001956
(87) International publication number: WO 2025/159130

(57) **Abstract**

Provided is a method for manufacturing a laminated core capable of suppressing deformation of a laminated core. The method for manufacturing a laminated core 3 in which a plurality of core pieces 7 are laminated, laminates the plurality of the core pieces 7 to form a core piece lamination 19 having a plurality of slots 11 in a circumferential direction, and arranges a piece of insulating paper 21 extending in an axial direction in each of the plurality of the slots 11 of the core piece lamination 19 to maintain a laminated state of the plurality of the core pieces 7 of the core piece lamination 19.

## Description

### FIELD OF THE INVENTION

The present invention relates to a method for manufacturing a laminated core in which a plurality of core pieces are laminated.

### BACKGROUND OF THE INVENTION

As a conventional method for manufacturing a laminated core, as disclosed in Patent Document 1, there is one in which a plurality of blocks are each formed by joining a plurality of electromagnetic steel sheets using caulking (fastening) while laminating the electromagnetic steel sheets, and a plurality of formed blocks are stacked and integrated by welding to obtain a laminated core.

In the method for manufacturing a laminated core, the electromagnetic steel sheets are, however, electrically and magnetically conducted at caulked portions (fastened portions) and welded portions, so that it may adversely affect efficiency of a rotating electric machine using the completed laminated core.

### CITATION LIST

### PATENT LITERATURE

| | |
|---|---|
| PATENT LITERATURE 1: | JP 2021-97493 A |

### SUMMARY OF THE INVENTION

### PROBLEMS TO BE SOLVED BY THE INVENTION

The problem to be solved is that there is a possibility of adversely affecting efficiency of a rotating electric machine using a laminated core.

### MEANS FOR SOLVING THE PROBLEM

The present invention provides a method for manufacturing a laminated core in which a plurality of core pieces are laminated, including laminating the plurality of the core pieces to form a core piece lamination having a plurality of slots in a circumferential direction; and arranging a piece of insulating paper extending in an axial direction in each of the plurality of the slots of the core piece lamination to maintain a laminated state of the plurality of the core pieces of the core piece lamination.

### EFFECT OF THE INVENTION

According to the present invention, an adverse effect on efficiency of a rotating electric machine using a laminated core is suppressed.

### BRIEF DESCRIPTION OF THE DRAWINGS

[FIG. 1] FIG. 1 is a perspective view illustrating a stator according to an embodiment of the present invention.
[FIG. 2] FIG. 2 is a perspective view illustrating only a laminated core of the stator of FIG. 1.
[FIG. 3] FIG. 3 is a plan view illustrating the laminated core of FIG. 2.
[FIG. 4] FIG. 4 is a perspective view illustrating a core piece used in the laminated core of FIG. 1.
[FIG. 5] FIG. 5(A) is a schematic perspective view illustrating a core piece and a jig in a method for manufacturing a laminated core according to the embodiment of the present invention, and FIG. 5(B) is a schematic perspective view illustrating a jig according to a modification.
[FIG. 6] FIG. 6 is a schematic perspective view illustrating a core piece lamination formed by laminating core pieces on the jig of FIG. 5(A).
[FIG. 7] FIG. 7 is a schematic perspective view illustrating a state when a piece of insulating paper is inserted into the core piece lamination of FIG. 6.
[FIG. 8] FIG. 8 is a schematic perspective view illustrating a state where the piece of insulating paper is inserted into the core piece lamination of FIG. 6.
[FIG. 9] FIGS. 9(A) to 9(C) illustrate details of the piece of insulating paper of FIG. 7, in which FIG. 9(A) is a plan view, FIG. 9(B) is a front view, FIG. 9(C) is a side view, and FIG. 9(D) is a schematic configuration diagram illustrating a sectional structure.
[FIG. 10] FIG. 10 is an enlarged plan view illustrating slots of the core piece lamination of FIG. 8 into which the pieces of insulating paper are inserted.
[FIG. 11] FIG. 11 is a schematic perspective view when removing slot pieces from the core piece lamination of FIG. 8.
[FIG. 12] FIG. 12 is a schematic perspective view illustrating a state where the pieces of insulating paper are inserted into the slots of the core piece lamination from which the slot pieces of FIG. 11 have been removed.

### EMBODIMENT FOR CARRYING OUT THE INVENTION

A method for manufacturing a laminated core 3 according to one embodiment laminates a plurality of core pieces 7 to form a core piece lamination 19 having a plurality of slots 11 in a circumferential direction. A piece of insulating paper 21 extending in an axial direction is arranged in each of the plurality of the slots 11 of the core piece lamination 19 to maintain a laminated state of the plurality of the core pieces 7 of the core piece lamination 19.

In this manufacturing method, the coil 5 may be assembled into the slots 11 to integrate the plurality of the core pieces 7 after the pieces of insulating paper 21 are arranged in all the slots 11.

Before arranging the pieces of insulating paper 21, a positioning member 27 may be arranged in a slot 11 of the core piece lamination 19 in the axial direction. In this case, the pieces of insulating paper 21 are arranged in empty slots 11 of the core piece lamination 19 without the positioning member 27 arranged therein.

In this manufacturing method, the positioning member 27 may be removed from the slot 11 after arranging at least one piece of insulating paper 21.

In this case, before removing the positioning member 27 from the slot 11, it is preferable to arrange the pieces of insulating paper 21 in empty slots 11 of the core piece lamination 19, without the positioning member 27 arranged therein, which are circumferentially adjacent to the slot 11 of the core piece lamination 19 in which the positioning member 27 is inserted.

The pieces of insulating paper 21 may be inserted into all the empty slots 11 of the core piece lamination 19 without the positioning member 27 arranged therein before removing the positioning member 27 from the slot 11.

The positioning member 27 may be inserted into each of two or more slots 11.

The piece of insulating paper 21 may fit into an inner periphery of the slot 11, and may have a closed sectional shape.

### EMBODIMENT

### [Laminated Core]

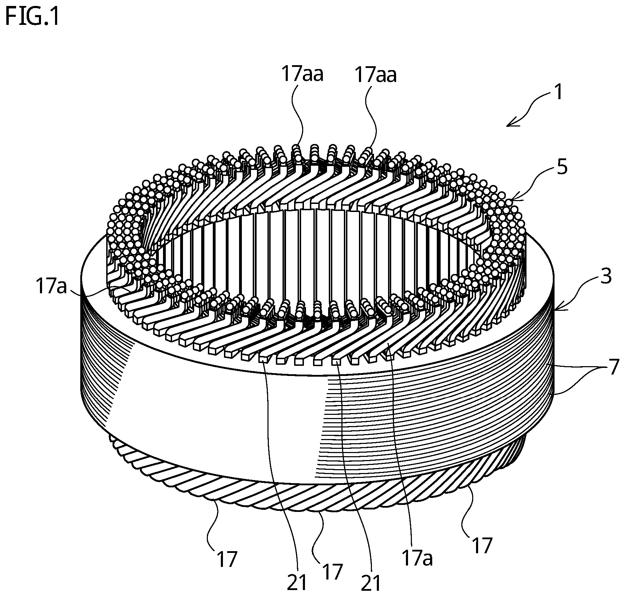

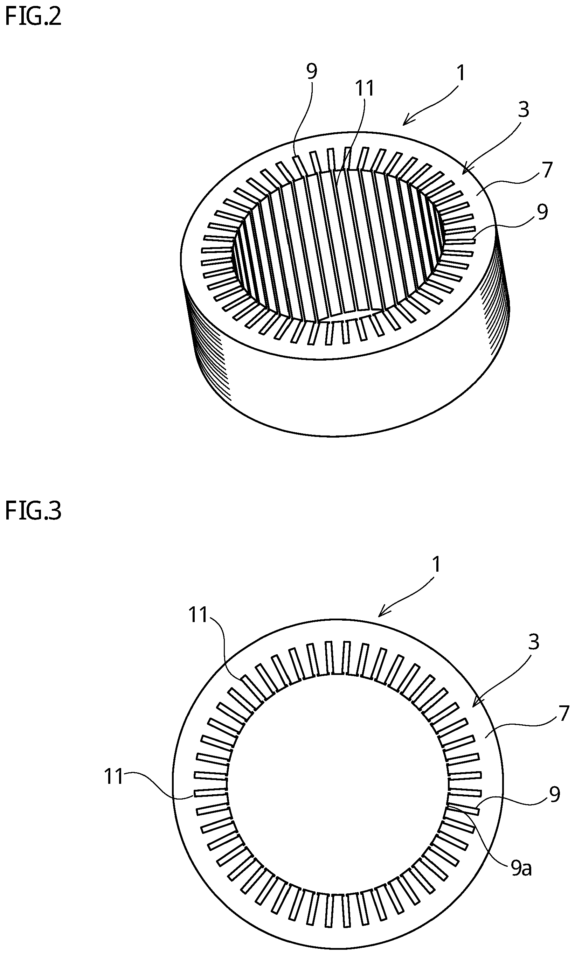

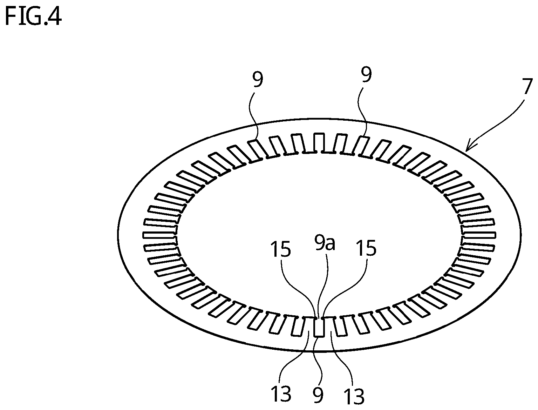

FIG. 1 is a perspective view illustrating a stator according to the embodiment of the present invention. FIG. 2 is a perspective view illustrating only a laminated core of the stator of FIG. 1. FIG. 3 is a plan view illustrating the laminated core of FIG. 2. FIG. 4 is a perspective view illustrating a core piece used in the laminated core of FIG. 1. In the following explanation, a lamination direction, a circumferential direction, a radial direction, and an axial direction mean a lamination direction, a circumferential direction, a radial direction, and an axial direction of the laminated core, respectively.

The stator 1 of FIG. 1 forms a rotating electric machine together with a rotor (not illustrated). The stator 1 includes a laminated core 3 and a coil 5.

The laminated core 3 is configured by laminating a plurality of core pieces 7 made of electromagnetic steel sheets, silicon steel sheets, or the like. An insulating coating which is not illustrated is formed on a surface of the core piece 7. A thickness of the core piece 7 is, for example, 0.15 mm to 0.40 mm. The laminated core 3 is a non-integrated core in which the core pieces 7 are not joined to each other by caulking (fastening), welding, or the like, and the core pieces 7 are integrated with each other by assembling pieces of insulating paper 21 and the coil 5. Each core piece 7 of the laminated core 3 is formed in an annular shape, and a plurality of slot portions 9 are provided on an inner periphery thereof in the circumferential direction.

Each slot portion 9 is aligned in phase with the slot portion 9 of axially adjacent core piece 7 to form a slot 11 communicating in the axial direction of the laminated core 3. The slot portion 9 opens at the inner periphery of the core piece 7 in the radial direction and extends toward an outer periphery.

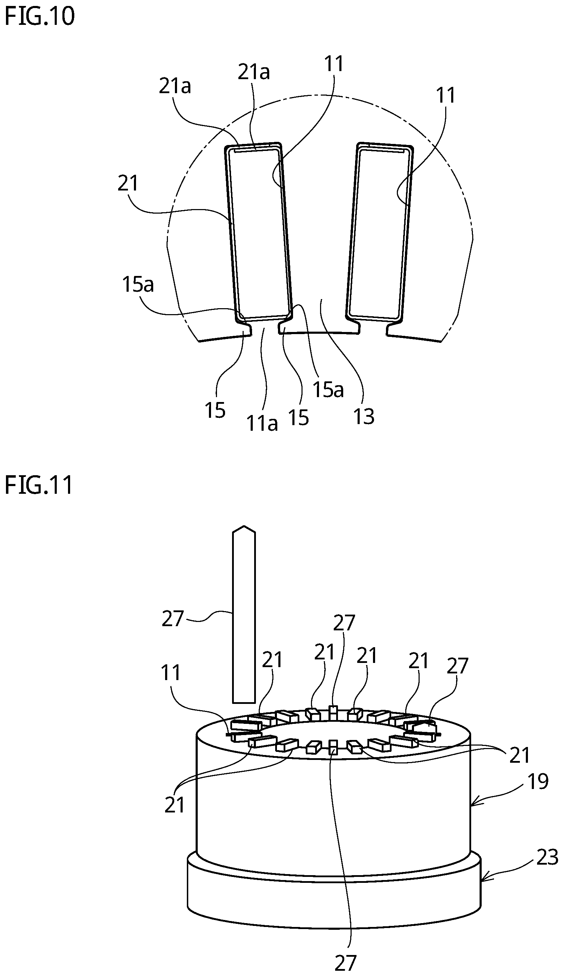

The slot portion 9 of the present embodiment is formed in a rectangular shape elongated in the radial direction in a plan view. An opening 9a of the slot portion 9 is defined by projected portions 15 extending in the circumferential direction from tips of teeth portions 13 between the slot portions 9. The opening 9a is narrower in width than other portions of the slot portion 9. The projected portion 15 has an inclined portion 15a configured such that a radial dimension thereof gradually decreases toward the opening 9a in the circumferential direction (see FIG. 10). It should be noted that the projected portions 15 may be omitted.

The coil 5 is assembled to the laminated core 3 so as to be a wave-winding shape having a plurality of layers in the radial direction. The coil 5 is composed of a plurality of coil segments 17. The coil 5, however, may be formed by winding a wire around the laminated core 3.

Each coil segment 17 is formed, for example, by bending a rectangular wire having a rectangular cross section into a U-shape, for example, a hairpin shape. The plurality of the coil segments 17 are arranged in a plurality of rows in the radial direction and in an annular shape along the circumferential direction with respect to the laminated core 3. A plurality of leg portions 17a of the plurality of the coil segments 17 are inserted into each slot 11 of the laminated core 3 from one side in the axial direction (the lower side in FIG. 1) in a state of being radially aligned. The leg portions 17a inserted into each slot 11 are axially projected from an end of the laminated core 3 on the other side in the axial direction (the upper side in FIG. 1).

The projecting portions of the leg portions 17a are subjected to bending in the radial direction and bending in the circumferential direction. The plurality of the core pieces 7 of the laminated core 3 are maintained in an integrated state by the coil 5 subjected to the bending process. Ends 17aa of radially adjacent leg portions 17a are welded together.

### [Method for Manufacturing Laminated Core]

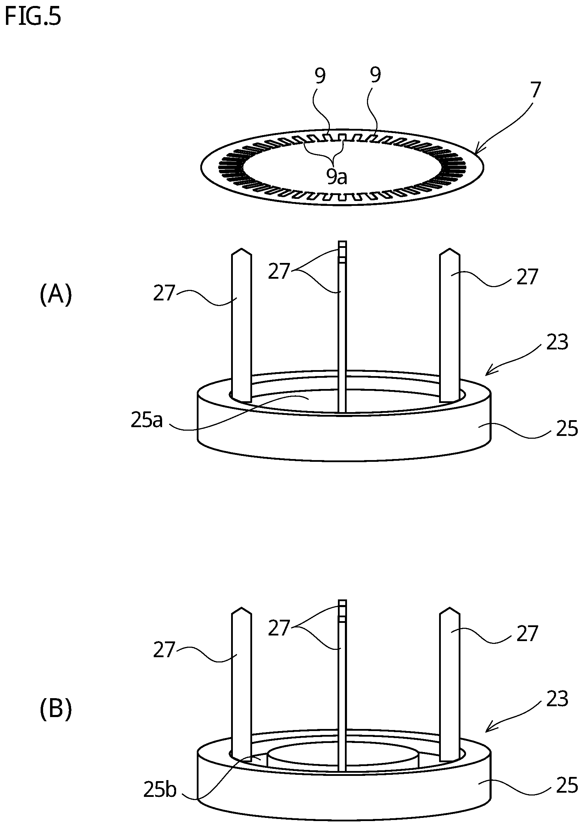

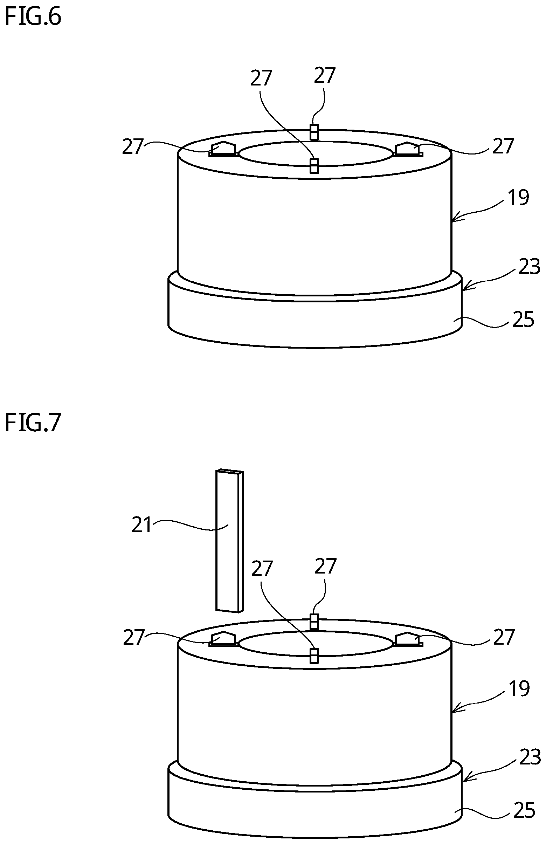

FIG. 5(A) is a schematic perspective view illustrating the core piece 7 and a jig in the method for manufacturing the laminated core 3 according to the embodiment of the present invention, and FIG. 5(B) is a schematic perspective view illustrating a jig according to a modification. FIG. 6 is a schematic perspective view illustrating a core piece lamination formed by laminating core pieces on the jig of FIG. 5(A). It should be noted that, in FIG. 6, only a part of the slots 11 is illustrated. The same applies to FIG. 7 described later.

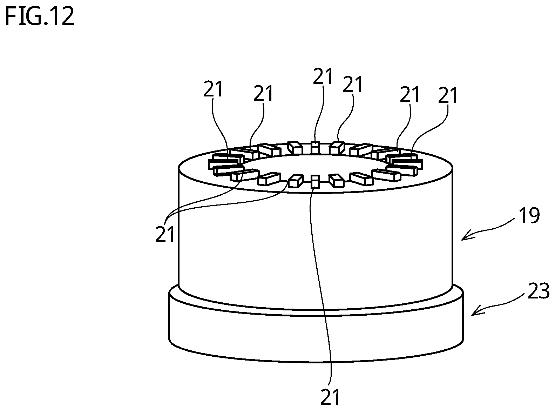

In the manufacturing method of the present embodiment, a plurality of the core pieces 7 are laminated to form a core piece lamination 19 having a plurality of the slots 11 in the circumferential direction. A piece of insulating paper 21 extending in the axial direction is arranged in each of the plurality of the slots 11 of the core piece lamination 19 to maintain the laminated state of the plurality of the core pieces 7 of the core piece lamination 19 (see FIG. 12).

In particular, as illustrated in FIG. 5(A), the core pieces 7 are laminated on a jig 23 in the axial direction, first. The jig 23 includes a base 25 and slot pieces 27.

The base 25 is formed in a plate shape capable of placing the core pieces 7 thereon. The slot piece 27 is a positioning member of the present embodiment, and is a rod-shaped body standing in the axial direction from four locations of the base 25 in the circumferential direction. The slot pieces 27 are provided detachably in the axial direction with respect to the base 25. For example, an end of the slot piece 27 is inserted into a hole provided in the base 25.

In addition, the slot piece 27 may be detachable by being moved radially inward with respect to the base 25. Further, the base 25 is provided with a recess 25a formed with a reduced thickness. As illustrated in FIG. 5(B), the base 25 may be provided with a groove 25b formed in a circular shape with a reduced thickness instead of the recess 25a.

Each slot piece 27 has a sectional shape to be inserted into the slot portion 9 of the core piece 7. In the present embodiment, it has a rectangular cross section corresponding to the rectangular shape of the portion of the slot portion 9 excluding the opening 9a.

In addition, the slot piece 27 may have another sectional shape such as a circular cross section that contacts the inner periphery of the slot portion 9. Alternatively, the base 25 may be omitted and only the slot pieces 27 may be used. Furthermore, although the number of the slot pieces 27 does not need to be four and may be one to three, or five or more, it is preferably two or more.

When laminating the core pieces 7, the core piece 7 is lowered relative to the jig 23 while inserting the slot pieces 27 of the jig 23 through the slot portions 9 of the core piece 7. This is repeated to laminate a predetermined number of the core pieces 7 to form the core piece lamination 19 of FIG. 6.

The core piece lamination 19 of FIG. 6 has the same configuration as the laminated core 3 illustrated in FIG. 2, and has the plurality of the slots 11 on the inner periphery. The slot piece 27 is arranged in each of one or some of the plurality of the slots 11, the four slots 11 in the embodiment. In the arranged slot pieces 27, tapered tips are projected upward from the core piece lamination 19.

In this state, the core pieces 7 of the core piece lamination 19 are not joined to each other, and the plurality of the core pieces 7 are positioned by the jig 23 while being aligned in phase with each other. The phase is a position in the circumferential direction (rotational direction). In the core piece lamination 19, the plurality of the slots 11 are formed in the circumferential direction by communicating the slot portions 9 of the core pieces 7 having the same phase in the axial direction. The core pieces 7 are insulated from each other by the insulating coatings on the surfaces.

In addition, the core piece lamination 19 may be formed by laminating the core pieces 7 without using the jig 23.

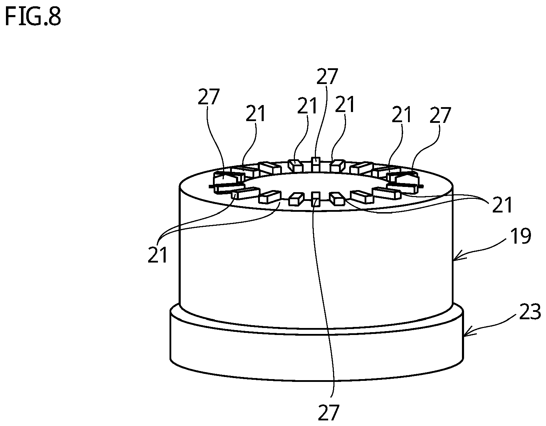

FIG. 7 is a schematic perspective view illustrating insertion of the piece of insulating paper 21 into the core piece lamination 19 of FIG. 6. FIG. 8 is a schematic perspective view illustrating a state that the piece of insulating paper 21 is inserted into the core piece lamination 19 of FIG. 6.

As illustrated in FIG. 7, the piece of insulating paper 21 is inserted and arranged into the slot 11 of the core piece lamination 19 in the axial direction. In addition, the piece of insulating paper 21 should be arranged in the slot 11, and an insertion direction at the time of the arrangement is arbitrary. For example, if the teeth portion 13 does not have the projected portions 15, the piece of insulating paper 21 may be arranged in the slot 11 from the radially inner side.

The insertion of the piece of insulating paper 21 is performed to empty slots 11 of the core piece lamination 19 without the slot piece 27 arranged therein. It should be noted that the pieces of insulating paper 21 is used for preventing leakage current and the like, so that the pieces of insulating paper are finally inserted into all the slots 11.

In the present embodiment, as illustrated in FIG. 8, the pieces of insulating paper 21 are inserted into all empty slots 11 without the slot piece 27 arranged therein. However, as long as the laminated state of the plurality of the core pieces 7 is maintained even without the slot pieces 27 as explained later, the pieces of insulating paper 21 may be inserted into only some of empty slots 11 without the slot piece 27 arranged therein. The maintaining in this context means maintaining a shape of the plurality of the core pieces 7 without falling apart when inserting other piece of insulating paper 21.

If the pieces of insulating paper 21 are inserted into only some of the empty slots 11 without the slot piece 27 arranged therein, it is preferable to insert the pieces of insulating paper 21 at least into the empty slots 11, without the slot piece 27 arranged therein, which are circumferentially adjacent to the slot 11 in which the slot piece 27 is inserted from the viewpoint of maintaining the positioning state using the slot pieces 27.

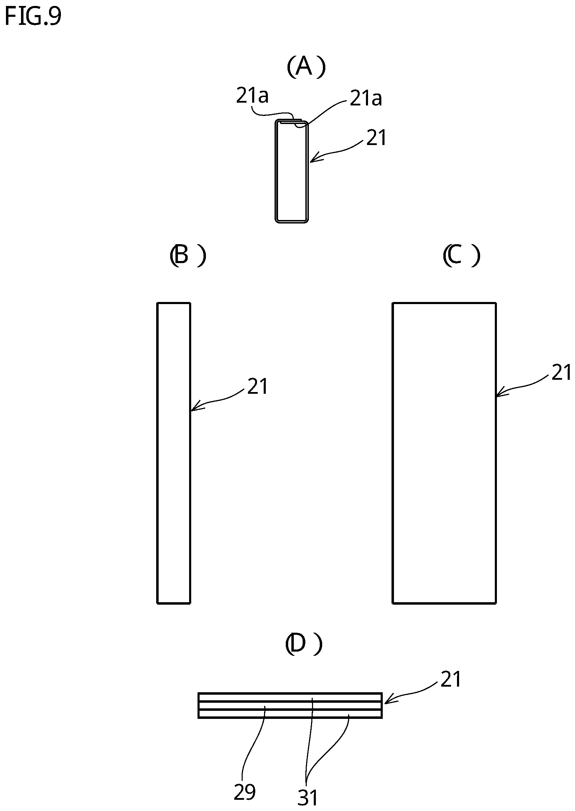

FIGS. 9(A) to 9(D) illustrate details of the piece of insulating paper 21 of FIG. 7, in which FIG. 9(A) is a plan view, FIG. 9(B) is a front view, FIG. 9(C) is a side view, and FIG. 9(D) is a schematic configuration diagram illustrating a sectional structure. FIG. 10 is an enlarged plan view illustrating the slots 11 of the core piece lamination 19 of FIG. 8 into which the pieces of insulating paper 21 are inserted.

For the insulating paper 21, an appropriate one may be adopted. The insulating paper 21 of the present embodiment is a composite material having a sectional structure in which an insulating paper base material 29 is sandwiched between insulating paper materials 31. The insulating paper 21 has a thickness of 130µm to 400µm, a longitudinal tensile strength of 90 to 110MPa, and a transverse tensile strength of 65 to 105MPa. The tensile strengths are all at room temperature.

Although the insulating paper base material 29 is not particularly limited, the insulating paper base material is made of resin such as PEN (polyethylene naphthalate). A thickness of the insulating paper base material 29 is, for example, 50 to 200µm. Although the paper material 31 is not particularly limited, the paper material is made of aramid paper or the like. Although the paper materials 31 on both sides of the insulating paper base material 29 have the same thickness of, for example, 50 to 80µm, the paper materials may have different thicknesses. The insulating paper base material 29 and the paper material 31 are bonded together by an appropriate adhesive such as an acrylic adhesive.

The piece of insulating paper 21 is bent into a cylindrical shape having a closed sectional shape that fits into the inner periphery of the slot 11. Ends 21a formed by the bending are overlapped with each other. The closed sectional shape of the present embodiment is a rectangular frame shape. It should be noted that the sectional shape formed by bending the piece of insulating paper 21 may set arbitrarily as long as the laminated state of the plurality of the core pieces 7 is maintained. For example, it may have a shape that opens toward the radial opening 9a of the slot 11 without the ends 21a overlapping.

Each side of the rectangular frame shape of the piece of insulating paper 21 contacts the inner periphery of the slot 11 in a plan view. A side of the piece of insulating paper 21 bridges an opening 11a of the slot 11 in the circumferential direction. The piece of insulating paper 21 defines an insertion space into which the leg portions 17a of the coil segments 17 are inserted. In addition, the opening 11a is configured by communicating the openings 9a of the slot portions 9, having the same phase, of the plurality of the core pieces 7 in the axial direction.

In the axial direction, the piece of insulating paper 21 is extended over the entire area of the slot 11, ends of which are projected from both ends of the core piece lamination 19. In addition, the recess 25a of the base 25 allows the projection of the piece of insulating paper 21 from the lower end of the core piece lamination 19 (the end contacting the base 25 of the jig 23). In the modification of FIG. 5(B), the groove 25b allows the projection of the piece of insulating paper 21 at the lower end of the core piece lamination 19. In this modification, since the core piece lamination 19 is supported on both sides of the groove 25b in the radial direction, it is possible to suppress deformation of the core pieces 7 such that the core pieces are turned up when inserting the piece of insulating paper 21 at the lower end portion of the core piece lamination 19.

FIG. 11 is a schematic perspective view when removing the slot pieces 27 from the core piece lamination 19 of FIG. 8. FIG. 12 is a schematic perspective view illustrating a state that the pieces of insulating paper 21 are inserted into the slots 11 of the core piece lamination 19 from which the slot pieces 27 of FIG. 11 have been removed.

Next, as illustrated in FIG. 11, the slot pieces 27 are removed from the slots 11 of the core piece lamination 19. The removal of the slot pieces 27 is performed by gripping the tips of the slot pieces 27 projecting from the end portion 21b of the core piece lamination 19 and pulling the slot pieces upward while holding the base 25 of the jig 23.

In addition, the removal of the slot pieces 27 is performed after inserting at least one piece of insulating paper 21. In this case, the number of the pieces of insulating paper 21 to be inserted is within a range capable of maintaining the laminated state of the plurality of the core pieces 7. Further, as explained above, the slot pieces 27 may be removed by being moved radially inward with respect to the base 25.

The pieces of insulating paper 21 are inserted into the empty slots 11 from which the slot pieces 27 have been removed. Although the insertion of the pieces of insulating paper 21 here is performed for each empty slot 11 after all the slot pieces 27 are removed, the insertion may be performed after each slot piece 27 is removed.

In this way, as illustrated in FIG. 12, the core piece lamination 19 in which the pieces of insulating paper 21 are inserted into all the slots 11 is placed on the base 25 of the jig 23. In this state, the shape of the core piece lamination 19 is maintained by the pieces of insulating paper 21 to such an extent that the plurality of the core pieces 7 are not collapsed at least during transportation or other processes.

Next, as illustrated in FIG. 1, the coil 5 is assembled into the slots 11 to integrate the plurality of the core pieces 7 of the core piece lamination 19.

Namely, the leg portions 17a of the plurality of the coil segments 17 are inserted into the slots 11 of the core piece lamination 19, and the projecting portions of the leg portions 17a from the core piece lamination 19 are subjected to the bending in the radial direction and the bending in the circumferential direction. As a result, the plurality of the core pieces 7 are fastened and integrated to form the laminated core 3. Thereafter, the ends 17aa of the radially adjacent leg portions 17a are welded together to manufacture the stator 1.

As explained above, in the method for manufacturing the laminated core 3 of the present embodiment, the laminated state of the plurality of the core pieces 7 of the core piece lamination 19 is maintained using the pieces of insulating paper 21 without depending on caulking (fastening), welding, or the like. This suppresses electrical and magnetic conduction between the core pieces 7 of the manufactured laminated core 3. Accordingly, in the present embodiment, an adverse effect on efficiency of a rotating electric machine using the laminated core 3 is suppressed.

Further, in the present embodiment, the laminated state of the plurality of the core pieces 7 of the core piece lamination 19 is maintained using the pieces of insulating paper 21 without depending on caulking (fastening), welding, or the like. This simplifies the manufacturing process and also suppresses deformation of the laminated core 3.

In the present embodiment, after the pieces of insulating paper 21 are inserted into all the slots 11, the coil 5 is assembled into the slots 11 to integrate the plurality of the core pieces 7 of the core piece lamination 19 and obtain the laminated core 3. In the present embodiment, deformation of the laminated core 3 is, therefore, more reliably suppressed and the manufacturing process is simplified.

Further, in the present embodiment, before inserting the pieces of insulating paper 21, the slot pieces 27 are arranged in one or some of the plurality of the slots 11 of the core piece lamination 19. The pieces of insulating paper 21 are, therefore, easily arranged in the slots 11 of the core piece lamination 19 in a state that the plurality of the core pieces 7 of the core piece lamination 19 are positioned.

In this case, after inserting the pieces of insulating paper 21 at least into the empty slots 11, without the slot piece 27 arranged therein, which are circumferentially adjacent to the slot 11 in which the slot piece 27 is inserted, the slot pieces 27 are removed. It is, therefore, easy to maintain the positioning state, caused by the slot pieces 27, of the plurality of the core pieces 7 .

In the present embodiment, the pieces of insulating paper 21 are inserted into all empty slots 11 of the core piece lamination 19 without the slot piece 27 arranged therein, before removing the slot pieces 27 from the slots 11. Accordingly, in the present embodiment, the positioning state of the plurality of the core pieces 7 caused by the slot pieces 27 is more reliably maintained.

If the slot pieces 27 are respectively inserted into two or more slots 11, the positioning state of the plurality of the core pieces 7 is stably maintained.

Since the piece of insulating paper 21 has the closed sectional shape that fits into the inner periphery of the slot 11, mechanical strength of the piece of insulating paper is improved, to more reliably maintain the positioning state of the plurality of the core pieces 7 caused by the slot pieces 27.

The piece of insulating paper 21 is a composite material in which the insulating paper base material 29 is sandwiched between the insulating paper materials 31. The mechanical strength is, therefore, improved, to more reliably maintain the positioning state, caused by the slot pieces 27, of the plurality of the core pieces 7 .

Since the insulating paper base material 29 is made of resin such as PEN, the mechanical strength of the piece of insulating paper 21 is improved, to more reliably maintain the positioning state, caused by the slot pieces 27, of the plurality of the core pieces 7.

### DESCRIPTION OF NUMERALS

- 3: Laminated core
- 7: Core piece
- 11: Slot
- 19: Core piece lamination
- 21: Insulating paper
- 23: Jig
- 27: Slot piece (Positioning member)
- 29: Insulating paper base material
- 31: Paper material

## Claims

1. A method for manufacturing a laminated core in which a plurality of core pieces are laminated, comprising:
laminating the plurality of the core pieces to form a core piece lamination having a plurality of slots in a circumferential direction; and
arranging a piece of insulating paper extending in an axial direction in each of the plurality of the slots of the core piece lamination to maintain a laminated state of the plurality of the core pieces of the core piece lamination.

2. The method for manufacturing a laminated core according to claim 1, wherein
a coil is assembled into the slots to integrate the plurality of the core pieces of the core piece lamination after the pieces of insulating paper are arranged in all the slots.

3. The method for manufacturing a laminated core according to claim 1, wherein
a positioning member is arranged in a slot of the core piece lamination in the axial direction before arranging the pieces of insulating paper, and the pieces of insulating paper are arranged in the slots of the core piece lamination without the positioning member arranged therein.

4. The method for manufacturing a laminated core according to claim 3, wherein
the pieces of insulating paper are arranged in empty slots of the core piece lamination, without the positioning member arranged therein, which are circumferentially adjacent to the slot of the core piece lamination in which the positioning member is arranged, and thereafter the positioning member is removed from the slot.

5. The method for manufacturing a laminated core according to claim 4, wherein
the pieces of insulating paper are arranged in all the empty slots of the core piece lamination without the positioning member arranged therein before removing the positioning member from the slot.

6. The method for manufacturing a laminated core according to any one of claims 3 to 5, wherein
the positioning member is arranged in each of two or more slots.

7. The method for manufacturing a laminated core according to any one of claims 1 to 5, wherein
the piece of insulating paper has a closed sectional shape that fits into an inner periphery of the slot.
